# EUROPÄISCHE PATENTANMELDUNG

(11) **EP 4 122 655 A1**
(43) Veröffentlichungstag der Anmeldung: **25.01.2023**
(21) Anmeldenummer: 21187078.7
(22) Anmeldetag: 22.07.2021
(51) Int. Cl.: B25J 9/16, G05B 19/406, G05B 19/414

(54) **ADDITIVE MANUFACTURING SYSTEM UND VERFAHREN ZUR ADDITIVEN HERSTELLUNG EINES BAUTEILS**

(71) Anmelder: Siemens Aktiengesellschaft, 80333 München (DE)
(72) Erfinder: Hauser, Tobias, 89347 Bubesheim (DE); Kamps, Tobias, 80538 München (DE); Reisch, Raven Thomas, 81379 München (DE); Winter, Dominik, 81827 München (DE)

(57) **Zusammenfassung**

Die Erfindung betrifft ein Fertigungssystem (2) umfassend eine Materialauftragsvorrichtung (4) für die additive Fertigung eines Bauteils (5), umfassend Sensoren (8), sowie Aktoren (10), wobei das System ein Maschinennetzwerk und ein vom Maschinennetzwerk (12) durch ein Edge-Gerät (14) getrenntes Sensornetzwerk (16) aufweist, wobei das Maschinennetzwerk (12) eine echtzeitfähige Steuerung (18) zur Steuerung der Aktoren (10) umfasst und das Sensornetzwerk (16) Sensordaten (20) der Sensoren (8) mittels eines Computers (22) vorverarbeitet und dem Maschinennetzwerk (12) zur Steuerung zur Verfügung stellt.

## Beschreibung

Wire Arc Additive Manufacturing (WAAM) ist ein Beispiel, das die Herstellung großvolumiger, metallischer Bauteile ermöglicht. Ein weiters typisches Verfahren hierfür ist das Laserschmelzverfahren (LMD). Dabei stellt die fehlende Wiederholbarkeit des Prozesses eine Herausforderung an die Qualitätssicherung dar. Um sicherzustellen, dass das Bauteil eine ausreichend hohe Qualität aufweist, muss der Prozess überwacht werden. In-Situ-Monitoringsysteme ermöglichen dabei die Analyse am Ort des Geschehens während des Prozesses.

Werden dann Defekte im Prozess erkannt, wird das gewonnene Wissen über die Defekte bisher nicht verwendet, um Prozessanpassungen umzusetzen. Das liegt daran, dass unbekannt ist, welcher Defekt vorliegt und wie diesem zu begegnen ist. Falls eine Anomalie detektiert wird, muss der Prozess deshalb aktuell abgebrochen werden und das Bauteil ist Ausschuss.

Die Aufgabe der Erfindung besteht darin, eine Fertigungsvorrichtung sowie ein Verfahren zur additiven Fertigung eines Bauteils bereitzustellen, die/das gegenüber dem Stand der Technik eine verbesserte Prozesskontrolle aufweist und die Ausschussrate während der Produktion senkt.

Die Lösung der Aufgabe besteht in einem Fertigungssystem nach Anspruch 1 sowie in einem Verfahren zur additiven Fertigung mit den Merkmalen des Anspruchs 9.

Das Fertigungssystem nach Anspruch 1 umfasst eine Materialauftragsvorrichtung für die additive Fertigung eines Bauteils, umfassend Sensoren, sowie Aktoren, wobei das System ein Maschinennetzwerk und ein vom Maschinennetzwerk durch ein Edge-Gerät getrenntes Sensornetzwerk aufweist, wobei das Maschinennetzwerk eine echtzeitfähige Steuerung zur Steuerung der Aktoren umfasst und das Sensornetzwerk Sensordaten der Sensoren mittels eines Computers vorverarbeitet und dem Maschinennetzwerk zur Steuerung zur Verfügung stellt.

Gegenüber dem Stand der Technik weist das beschriebene Fertigungssystem den Vorteil auf, dass es in der genannten Ausgestaltung die Möglichkeit bietet, dass in dem Sensornetzwerk die Sensordaten ausgewertet werden können und somit Anomalien bei der Fertigung des Bauteils frühzeitig erkannt werden können. Diese Informationen über Anomalien können über das Edge Gerät an das vom Sensornetzwerk getrennte Maschinennetzwerk und somit an die Steuerung weitergegeben werden und Gegenmaßnahmen können eingeleitet werden. Dies bedeutet wiederum, dass das Maschinennetzwerk nicht durch Berechnungsarbeiten belastet wird und die Steuerung der Maschine (hier u. a. die Materialauftragungsvorrichtung) sicher in Echtzeit gesteuert werden kann. Die Echtzeit Steuerung wird somit nicht gefährdet und dennoch ist es möglich vorteilhafte Berechnungen vorzunehmen und von der Steuerung in Form von Befehlen umsetzen zu lassen.

Es werden hierbei folgende Definition für verwendete Begriffe angegeben:

### Materialauftragsvorrichtung

Umfasst einerseits ein auftragbasiertes additive Fertigungssystem mittels Druckkopf, zum anderen jedoch auch ein bettbasiertes additive Fertigungssystem. Die Materialauftragsvorrichtung ist dabei ein allgemeiner Begriff für die Vorrichtung, die zumindest eine bewegliche Komponente aufweist um Energie und/oder Material an das entstehende Bauteil heranzutragen, dies kann bei einem bettbasierten Verfahren eine Laseroptik sein, bei einem auftragsbasierten System ein Roboterarm beispielsweise mit einem Schmelzdraht eines Schweißkopfes oder einer Pulverspritzdüse (vereinfachend Druckkopf genannt).

### Echtzeit

Der Begriff Echtzeit (englisch real-time) charakterisiert den Betrieb informationstechnischer Systeme, die bestimmte Ergebnisse zuverlässig innerhalb einer vorbestimmten Zeitspanne, zum Beispiel in einem festen Zeitraster, liefern können. Die Definition ist in DIN ISO/IEC 2382 (Informationsverarbeitung), Teil 9 (Verarbeitungsabläufe) lautete: Unter Echtzeit versteht man den Betrieb eines Rechensystems, bei dem Programme zur Verarbeitung anfallender Daten ständig betriebsbereit sind, derart, dass die Verarbeitungsergebnisse innerhalb einer vorgegebenen Zeitspanne verfügbar sind. Die Daten können je nach Anwendungsfall nach einer zeitlich zufälligen Verteilung oder zu vorherbestimmten Zeitpunkten anfallen. Durch die Hardware und Software muss sichergestellt werden, dass keine Verzögerungen auftreten, welche die Einhaltung dieser Bedingung verhindern könnten. Die Verarbeitung der Daten muss dabei nicht besonders schnell erfolgen, sie muss nur garantiert schnell genug für die jeweilige Anwendung erfolgen.

**Aktoren** sind Bauteile, die dazu geeignet sind, die Materialauftragsvorrichtung oder bspw. eine Gaszufuhr oder eine Materialzufuhr zu bewegen. Hierunter fallen insbesondere Motoren, Piezoaktoren, Luftruck- oder Hydrauliksysteme usw.

### Anomalie

Eine Anomalie bezieht sich auf das zu fertigende Bauteil und stellt in der Regel einen Defekt oder die Vorstufe eines Defektes, beispielsweise ein Oxidationscluster in dem entstehenden Bauteil dar. Derartige Anomalien im Bauteil gilt es möglichst während des Fertigungsprozesses mittels Sensoren zu detektieren und ebenfalls während des Fertigungsprozesses zu kompensieren oder zu beseitigen.

### Anomaliedetektionsmodell

Ein Anomaliedetektionsmodell ist ein Modell, z.B. ein neuronales Netz, es eignet sich durch Lernen eine Repräsentation von Trainingsdaten an, damit aus Eingangsdaten Ausgangsdaten berechnet werden können. Trainingsdaten sind beispielsweise Datensätze von Sensordaten aus einem bereits abgelaufenen Fertigungsprozesse, die ein bekanntes, beispielsweise gutes Prozessergebnis in Form eines Bauteils geliefert haben.

Ein Generalisiertes Anomaliedetektionsmodell ist ein auf verfügbaren Trainingsdaten angelerntes Modell; wobei dem Anlernen das Ziel zugrunde liegt, das Modell zu generieren, das eine hohe Genauigkeit bei der Berechnung der Ausgangsdaten basierend auf den Eingangsdaten für alle Parametersätze hat. Das generalisierte Anomaliedetektionsmodell ist bei verschiedenen Parametersätzen einsetzbar, allerdings weist es eine geringere Genauigkeit der Berechnungen im Vergleich zu einem spezialisierten Modell auf. Das spezialisierte Modell ist ein auf einen parametersatzspezifischen Datensatz angelerntes Modell, das auf einem adaptiven Anomaliedetektionsmodell basiert. Es wird innerhalb weniger Schritte und/oder innerhalb kurzer Zeit bei einem neuen Parametersatz konditioniert angelernt. Es ist parametersatzspezifisch einsetzbar, weist aufgrund der Spezialisierung im Vergleich zu dem generalisierten Anomaliedetektionsmodell eine höhere Genauigkeit bei der Berechnung von Anomalien auf Basis eines speziellen Parametersatz auf.

### Edge-Gerät

Ein Edge-Gerät ist ein Gerät, das einen Knotenpunkt zwischen zwei Netzwerken, beispielsweise zwischen dem beschriebenen Maschinennetzwerk und dem Sensornetzwerk oder zwischen dem Sensornetzwerk und dem Internet darstellt.

### MQTT Broker

MQTT ist ein offenes Netzwerkprotokoll für Machine-to-Machine-Kommunikation (M2M), das die Übertragung von Telemetriedaten in Form von Nachrichten zwischen Geräten ermöglicht, trotz hoher Verzögerungen oder beschränkter Netzwerke. Entsprechende Geräte reichen von Sensoren und Aktoren, Mobiltelefonen, Eingebetteten Systemen in Fahrzeugen oder Laptops bis zu voll entwickelten Rechnern. Hierbei ist es so, dass ein MQTT-Server ("Broker") die gesamte Datenlage seiner Kommunikationspartner hält, und so als Zustands-Datenbank benutzt werden kann. So ist es möglich, kleine unperformante MQTT-Geräte mit einem MQTT-Broker zu verbinden, wobei die Geräte Daten einsammeln und/oder Befehle entgegennehmen, während ein komplexes Lagebild nur auf dem MQTT-Broker entsteht und hier oder durch einen leistungsfähigen Kommunikationspartner ausgewertet werden kann. Stelleingriffe können so von einer oder mehreren leistungsfähigen Instanzen an den MQTT-Broker übermittelt und auf die einzelnen Geräte verbreitet werden. Dadurch eignet sich MQTT sehr gut für Automatisierungslösungen und findet im Bereich IoT durch die einfache Verwendung große Verbreitung.

Eine vorteilhafte Ausgestaltungsform der Erfindung besteht darin, dass ein zweites Edge-Gerät vorgesehen ist, das eine Verbindung des Sensornetzwerkes und einer außerhalb dessen befindlichen Daten- und/oder Berechnungscloud herstellt. Dies hat den Vorteil, sehr umfangreiche Berechnungen, beispielsweise von sehr komplexen Anomaliedetektionsmodellen oder die Entwicklung von spezialisierten Anomaliedetektionsmodellen aus adaptiven Anomaliedetektionsmodellen an einem Großrechner in einem Rechnungszentrum räumlich deutlich vom Fertigungsstandort getrennt, durchführen zu lassen.

Das Edge-Gerät ist in einer vorteilhaften Ausgestaltungsform in Form eines Microcontrollers aufgebaut, bzw. umfasst diesen. Als Mikrocontroller werden Halbleiterchips bezeichnet, die einen Prozessor und zugleich auch Peripheriefunktionen enthalten. In vielen Fällen befindet sich auch der Arbeits- und Programmspeicher teilweise oder komplett auf demselben Chip. Ein Mikrocontroller ist ein Ein-Chip-Computersystem. Für manche Mikrocontroller wird auch der Begriff System-on-a-Chip oder SoC verwendet. Auf modernen Mikrocontrollern finden sich häufig auch komplexe Peripheriefunktionen wie z. B. CAN-(Controller Area Network), LIN- (Local Interconnect Network), USB- (Universal Serial Bus), I²C- (Inter-Integrated Circuit), SPI- (Serial Peripheral Interface), serielle oder Ethernet-Schnittstellen, PWM-Ausgänge, LCD-Controller und -Treiber sowie Analog-Digital-Umsetzer. Einige Mikrocontroller verfügen auch über programmierbare digitale und/oder analoge bzw. hybride Funktionsblöcke. Der Vorteil bei der Verwendung von Microcontrollern für das Sensornetzwerk besteht darin, dass das Sensornetzwerk je nach Bedarf leicht erweitert werden kann. Ein Upscaling des Sensornetzwerkes beispielsweise bei einer Erweiterung des Fertigungssystems auf mehrere Materialauftragungsvorrichtungen ist ohne größere Eingriffe in die Netzarchitektur möglich.

Ferner ist es zweckmäßig, dass das Edge-Gerät zur Übertragung von Daten mit der Steuerung des Maschinennetzwerkes in Verbindung steht. Auf diese Weise können die vorverarbeiteten Informationen beispielsweise über Ort und Beschaffenheit von Anomalien direkt an die Steuerung weitergegeben werden. Diese kann dann diese Informationen in Steuerbefehle zur Behebung von Anomalien umwandeln.

Im Gegenzug dazu ist es auch von Vorteil, dass das Edge-Gerät zur Übertragung von Daten mit mindesten einem Sensor in Verbindung steht, so dass Sensordaten direkt im Sensornetzwerk bearbeitet werden können.

Wie bereits erläutert, ist es durch die Anordnung des beschriebene Fertigungssystems mit wenig Aufwand möglich, dies zu erweitern. Daher sind grundsätzlich mehrere, insbesondere mehr als zwei Edge-Geräte zur Trennung des Sensornetzwerks und des Maschinennetzwerks vorgesehen. Die Edge Geräte, die das Sensornetzwerk vom Maschinennetzwerk trennen, können auch, insbesondere wenn sie einen Microcontroller umfassen, auch den Computer, also die Recheneinheit des Sensornetzwerkes, zumindest teilweise bilden. Rechenoperationen, die zur Vorverarbeitung und Auswertung der Sensordaten erfolgen, können also auch auf dem Edge-Gerät als Teil des Computers des Sensornetzwerkes erfolgen.

Zweckmäßige Sensoren zur Überwachung des Fertigungssystems, die wertvolle Informationen für die Auswertung möglicher Anomalien hilfreich sind, sind Spektrometer, Pyrometer, und oder Kameras.

Zudem ist es vorteilhaft, wenn ein drittes Edge Gerät mit einem Visualisierungsgerät zur Datenübertragung in Verbindung steht. Das dritte Edge-Gerät unterscheidet sich zur besseren Unterscheidbarkeit in der Terminologie vom zweiten Edge-Gerät zur Anbindung an die Cloud und den ersten Edge-Geräten oder Geräten, das/die zur Trennung des Sensornetzwerkes und des Maschinennetzwerkes dient/dienen. Grundsätzlich kann es sich jedoch um baugleiche oder ähnliche Edge-Geräte handeln, die andere Anwendungszwecke haben. Die Visualisierung der vorbereiteten Sensordaten kann der Bedienperson wertvolle Hinweise zur manuellen Nachsteuerung des Fertigungssystem liefern und zur Systemüberwachung dienen.

Ein weiterer Bestandteil der Erfindung ist ein Verfahren zum Betreiben eines additiven Fertigungsverfahren, dieses umfasst folgende Schritte:
- Steuern von Aktoren mittels Prozessbefehlen die mittels einer echtzeitfähigen Steuerung in einem Maschinennetzwerk berechnet werden,
- Sammeln von Sensordaten von Sensoren, durch die das Fertigungsverfahren überwacht wird,
- Übermittlung der Sensordaten an einen Computer, der in einem vom Maschinennetzwerk durch ein Edge-Gerät getrennten Sensornetzwerk angeordnet ist,
- Vorverarbeitung der Sensordaten mittels des Computers wobei
- die im Sensornetzwerk vorverarbeiteten Sensordaten dem Maschinennetzwerk zur Fertigungssteuerung bereit gestellt werden.

Das beschriebene Verfahren weist die analogen Vorteile gegenüber dem Stand der Technik auf, die bereits bezüglich des Fertigungssystems erörtert sind. Die Definitionen gelten geleichermaßen.

Eine vorteilhafte Ausgestaltungsform des Verfahrens besteht darin, dass die Vorverarbeitung der Sensordaten mittels eines Anomaliedetektionsmodells erfolgt. Die Wirkungsweise eines Anomaliedetektionsmodell ist bereits beschrieben. Es dient dazu, Anomalien im Bauteil mittels der Sensordaten zu detektieren und gegebenenfalls durch die Steuerung Prozessmaßnahmen einzuleiten, um entstehende Anomalien zu eliminieren. Dies kann automatisiert ohne Eingreifen eines Bedienpersonals erfolgen.

Zur Entlastung des Computers des Sensornetzwerkes ist es zweckmäßig, dass die Sensordaten aus dem Sensornetzwerk mittels eines zweiten Edge-Geräts zur Vorbereitung an eine Berechnungscloud geschickt werden.

Wie bereits erläutert, ist es ebenfalls zweckmäßig, wenn mittels eines dritten Edge-Geräts Daten zur Prozessvisualisierung an ein Visualisierungsgerät übermittelt werden.

In vorteilhafter Weise erfolgt ein Datenaustausch innerhalb des Netzwerkes mittels eines MQTT Protokolls, wobei ein MQTT Broker als Daten-BUS verwendet wird.

Weitere Merkmale der Erfindung und weiter vorteilhafte Ausgestaltungen der Erfindungen werden in folgenden Figuren näher beschrieben. Dabei handelt es sich um beispielhafte, schematische Darstellungen, die keine Einschränkung des Schutzbereiches darstellen.

### Dabei zeigen:

- Figur 1,: eine schematische Darstellung einer Fertigungsanlage zum Lichtbogendrahtauftragsschweißen,
- Figur 2: ein Fertigungssystem zum additiven Fertigen von Bauteilen.

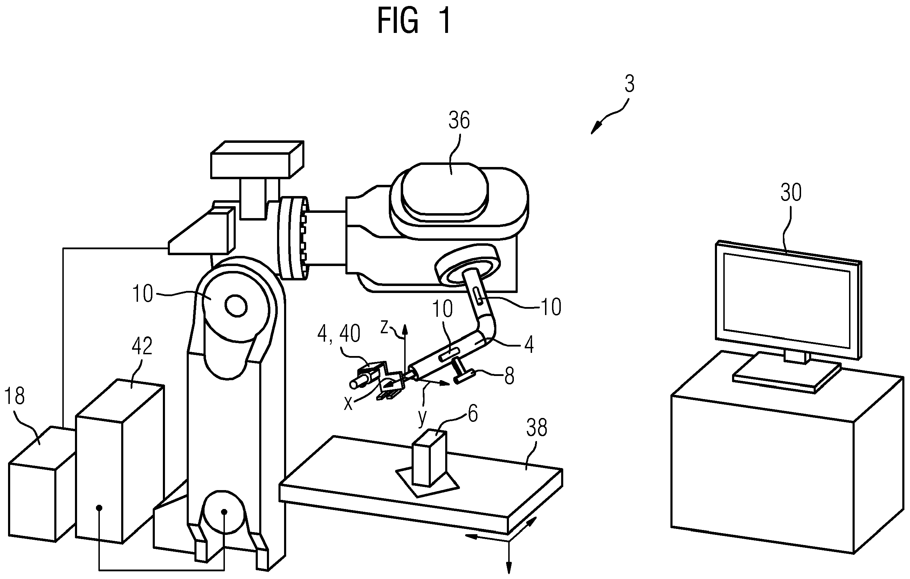

In Figur 1 ist eine Fertigungsanlage 3 dargestellt, die für eine additiven Fertigungsanlage steht und die hier exemplarisch in Form einer Lichtbogendrahtauftragsschweiß-Anlage (WAAM) ausgestaltet ist. Grundsätzlich kann das beschriebene zu Figur 1 auch auf eine Laserauftragsschweiß-Anlage angewandt werden oder auf ein System, bei dem ein Druckkopf in einem Pulverbett ein additives Bauteil erzeugt.

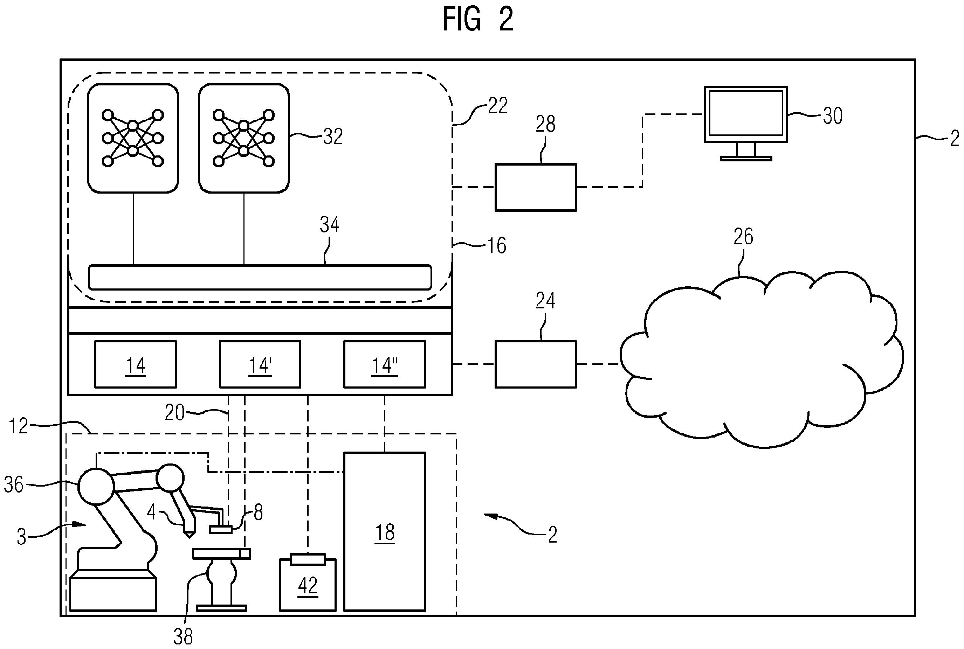

Die Fertigungsanlage 3, die wiederum Teil eines Fertigungssystems 2 gemäß Figur 2 ist, umfasst zum einen einen Roboterarm 36. Der Roboterarm 36 umfasst dabei wiederum eine Mehrzahl von Aktoren 10, die insbesondere in Form von Stellmotoren oder Linearmotoren aber auch in Form von Piezoaktoren ausgestaltet sein können. Ferner ist ein Schweißkopf 40 vorgesehen, der hier stellvertretend für eine Materialauftragsvorrichtung 4 steht. Auf einem Positioniertisch 38 ist dabei ein während des Fertigungsprozesses entstehendes Bauteil 6 angeordnet. Sowohl der Positioniertisch 38 und der Roboterarm 36 werden durch eine Steuerung 18 gesteuert. Ferner ist eine Energieversorgung 42 vorgesehen, durch die die nötige Prozessenergie einmal zum Betreiben der Aktoren 10 und zum anderen zum Aufbringen des Materials auf das entstehende Bauteil 6 dient. Ferner ist in Figur 1 ein Visualisierungsgerät 30 dargestellt, auf das eine Bedienperson schauen kann und mögliche Probleme bei der Fertigung visualisiert aufbereitet bekommt.

Beim Betrieb einer derartige Fertigungsanlagen 3 zur additiven Herstellung eines Bauteils 6 kommt es gelegentlich vor, dass im entstehenden Bauteils 6 Anomalien auftreten, die im Weiteren zu schwerwiegenden Bauteildefekten werden. Dabei kann eine Anomalie beispielsweise eine Luftblase oder eine Oxidation sein. Kleine Anomalien können sich dabei zu stärkeren Anomalien und letztlich zu Defekten auswachsen. Wird ein Defekt nicht rechtzeitig erkannt, muss das Bauteil 6 in den Ausschuss gegeben werden. Um eine möglichst hohe Prozesssicherheit zu realisieren, wird der Prozess bisher durch eine geschulte Fertigungskraft überwacht. Diese Überwachung ist jedoch nicht so zuverlässig, wie dies eine sensorgesteuerte Überwachung ermöglichen könnte. In der Regel ist jedoch die Steuerung 18, die in Echtzeit arbeiten muss, nicht in der Lage entsprechende Sensordaten, die auf Anomalien schließen könnten, auszuwerten.

In Figur 2 wird daher ein Fertigungssystem 2 vorgestellt, dass neben dem der Fertigungsanlage 3 einschließlich der Steuerung 18 sowie der Energieversorgung 42 drei zusätzliche Merkmale aufweist. Zum einen ist ein Maschinennetz 12 vorgesehen, dass dazu geeignet ist, die Steuerungssignale in Echtzeit an die Aktoren 10 der Fertigungsanlage 3 weiterzugeben und diese zu steuern. Im Weiteren ist ein Sensornetzwerk 16 vorgesehen, dass mit den Sensoren 8, beispielsweise einer Schweißkamera in Verbindung steht und Sensordaten 20 in das Sensornetzwerk 16 geleitet werden.

Das Sensornetzwerk 16 und das Maschinennetzwerk 12 sind dabei durch mindestens ein Edge-Gerät 14 voneinander getrennt. Dabei kann es sein, dass Sensordaten 20 ein Stück weit über die Leitungen des Maschinennetzwerkes 12 zum Edge-Gerät 14 geleitet werden. Die Verarbeitung der Sensordaten 20 erfolgen jedoch innerhalb des Sensornetzwerkes 16. Hierfür weist das Sensornetzwerk 16 mindestens einen Computer 22 auf, der zur Verarbeitung der Sensordaten 20 dient. Hierbei werden beispielsweise Anomaliedetektionsmodelle ausgeführt, die auf Basis der Sensordaten entstehende Anomalien detektieren können. Auf die Wirkungsweise dieser Modelle wird noch eingegangen werden.

Zur Kommunikation innerhalb des Sensorsystems 16 wird dabei ein sogenannter MQTT Broker als Datenbus verwendet. Es ist anzumerken, dass das Edge-Gerät 14 oder mehrere dieser Edge-Gerät 14' und 14" ihrer Rechenleistung für die Aufbereitung der Sensordaten 20 zur Verfügung stellen können und damit Teil des Computers 22 sind. Es ist ebenfalls zweckmäßig, je nach Anforderung des Fertigungssystems 2 dessen Größe und Dimension mehrere Edge-Gerät 14, 14' und 14" anzuordnen, was den Vorteil hat, dass bei wachsenden Anforderungen an das Fertigungssystem 2 eine Aufstockung des Sensornetzwerkes 16 in Form eines Upscalings möglich ist.

Ferner kann es zweckmäßig sein, wenn das Sensornetzwerk 16 bezüglich seiner Rechenkapazitäten an seine Grenzen kommt, eine Berechnung der Sensordaten 20 in einer Berechnungscloud 26 zu nutzen. Hierbei ist ein weiteres, zweites Edge-Gerät 24 vorgesehen, dass die Verbindung zwischen dem Sensornetzwerk 16 und der Cloud 26 herstellt. In diesem Fall wird die Cloud als Teil des Sensornetzwerkes 16 betrachtet.

Im Weiteren kann es zweckmäßig sein, wenn ein drittes Edge-Gerät 28 vorgesehen ist, dass eine Datenverbindung zu dem Visualisierungsgerät 30 herstellt. Auf diese Weise können bereits aufbereitetes Sensordaten und Informationen über Anomalien auf dem Visualisierungsgerät 30 für eine Bedienperson visualisiert werden, sodass diese Personen gegebenenfalls auch manuell in das Fertigungsverfahren eingreifen kann.

Das vorgeschlagene Fertigungssystem 2 basiert auf einer Reihe skalierbarer und portabler containerisierter Microservices, die auf einer beliebigen Anzahl von Edge-Geräten 14, die als Netzwerkknoten dienen, ausgeführt werden und kontinuierlich einen Strom von Messungen und Prozessparametern in Form von Sensordaten 20 von den beschriebenen Sensoren 8 und gegebenenfalls auch von der Steuerung 18 empfangen. Alle Microservices werden mit Hilfe der Containervirtualisierung auf Linux-Betriebssystemen gekapselt, was eine Skalierbarkeit, Portabilität und Hardwareabstraktion ermöglicht. Die serviceübergreifende Kommunikation wird mit Hilfe des MQTT-Protokolls und eines MQTT-Brokers 34 als zentraler Datenbus ermöglicht. Empfangene Sensormessungen und Druckinformationen werden über den Databus veröffentlicht und von anderen abonnierenden Diensten auf allen Netzwerkknoten empfangen. Es werden Dienste für den Empfang von Sensorinformationen, die Analyse der Informationen, die Überwachung des Prozesses und die Speicherung der Daten genutzt.

Anomaliedetektion: Für jeden Sensor werden kleine Convolutional Autoencoder Neural Networks (CANNs) in einem vordefinierten eindimensionalen Datenfenster trainiert, das nur Eingabedaten wieder erstellt, die einen stabilen und nicht-anomalen Fertigungsprozess darstellen. Der Rekonstruktionsfehler dieser Modelle wird als Anomalie-Score verwendet, der angibt, inwieweit eine Sensordateneingabe als Anomalie klassifiziert wird. Bei der Schweißkamera als Sensor 8 werden die empfangenen Bilder vorverarbeitet, bevor sie als Modelleingabe verwendet werden. Anstelle der eigentlichen Bilder werden die Histogramme extrahiert und für die Generierung von Anomalien verwendet. Für einen Indikator für die Erkennung multivariater Anomalien werden alle Anomalienwerte aggregiert und ein endgültiger Schwellenwert definiert, basierend auf Werten, die aus stabilen Prozessdaten empfangen wurden. Wenn dieser Schwellenwert überschritten wird, geht das System von einer Anomalie aus. Alle Modelle sowie die Entfernungsberechnung werden wieder als gekapselte Dienste implementiert, wodurch sie skalierbar und unabhängig vom zugrunde liegenden Netzwerkknoten sind.

Modell Retraining in der Cloud: Aufgrund der Prozesskonzeptdrift ist eine häufiges Retraining der Anomalieerkennungsmodelle erforderlich, um eine hohe Detektionsgenauigkeit und eine niedrige Falsch-Positiv-Rate zu gewährleisten. Dazu werden Sensordaten 20 über das zweite Edge-Gerät 24 an die Cloud 26 weitergeleitet. In der Cloud 26 werden Rechnerressourcen verwendet, um die Modelle automatisch neu zu trainieren. Nach dem Retraining werden die neuen Modelle mittels des zweiten Edge-Geräts 24 zurückgesendet und in der Anomalieerkennungsanwendung aktualisiert, um eine verbesserte Erkennungsgenauigkeit zu erzielen.

Mittels der ersten Edge-Geräte 14, die das Sensornetzwerk 16 und das Maschinennetzwerk 12 trennen, werden Informationen zu einer detektierten Anomalie wie z. B. die geographische Position der Anomalie und/oder ein Zeitpunkt zu dem der Schweißkopf 40 sich dieser Anomalie zur weiteren Materialauftragung nähert, an die Steuerung 18 des Maschinennetzwerkes 12 geschickt. Diese Informationen können durch die Steuerung 18 in Prozessbefehle umgewandelt werden, um die weitere Ausbreitung der Anomalie zu unterbinden. Derartige Prozessbefehle können beispielsweise mehr oder weniger Materialauftrag, eine höhere Schmelztemperatur des aufzubringenden Materials oder eine geringere Vorschubgeschwindigkeit des Schweißkopfes 40 sein.

Vorteile gegenüber dem Stand der Technik: Im Gegensatz zu den bekannten Lösungen ermöglicht der vorgeschlagene Ansatz die Echtzeit-Anomalieerkennung für eine beliebige Anzahl von Sensoren 8 bei geringer Latenz und ist resistent gegen Konzeptdrift, indem automatisch Retrainings der verwendeten ML-Modelle in der Cloud 26 initiiert werden. Darüber hinaus ist eine manuelle Inspektion durch einen Prozessexperten bei langen Drucken nicht realisierbar. Stattdessen bietet der vorgeschlagene Ansatz die Möglichkeit, die Qualität des Teils in der Fertigung nahezu in Echtzeit zu überwachen.

Die Architektur ist sehr gut skalierbar und neue Sensoren 8 können einfach hinzugefügt werden. Alle Daten sind gut synchronisiert und so kann ein Defekt präzise lokalisiert werden.

### Bezugszeichenliste

- 2: Fertigungssystem
- 3: Fertigungsanlage
- 4: Materialauftragvorrichtung
- 6: Bauteil
- 8: Sensoren
- 10: Aktoren
- 12: Maschinennetzwerk
- 14: Edge-Gerät
- 16: Sensornetzwerk
- 18: Steuerung
- 20: Sensordaten
- 22: Computer
- 24: zweites Edge Gerät
- 26: Cloud
- 28: drittes Edge Gerät
- 30: Visualierungsgerät
- 32: Anomaliedetektionsmodelle
- 34: MQTT Broker
- 36: Roboterarm
- 38: Positioniertisch
- 40: Schweißkopf
- 42: Energieversorgung

## Patentansprüche

1. Fertigungssystem (2) umfassend eine Materialauftragsvorrichtung (4) für die additive Fertigung eines Bauteils (5), umfassend Sensoren (8), sowie Aktoren (10), wobei das System ein Maschinennetzwerk und ein vom Maschinennetzwerk (12) durch ein Edge-Gerät (14) getrenntes Sensornetzwerk (16) aufweist, wobei das Maschinennetzwerk (12) eine echtzeitfähige Steuerung (18) zur Steuerung der Aktoren (10) umfasst und das Sensornetzwerk (16) Sensordaten (20) der Sensoren (8) mittels eines Computers (22) vorverarbeitet und dem Maschinennetzwerk (12) zur Steuerung zur Verfügung stellt.

2. Fertigungssystem nach Anspruch 1, **dadurch gekennzeichnet, dass** ein zweites Edge-Gerät (24) vorgesehen ist, dass eine Verbindung des Sensornetzwerkes (16) und einer außerhalb dessen befindlichen Daten- und/oder Berechnungscloud (26) herstellt.

3. Fertigungssystem nach Anspruch 1 oder 2, **dadurch gekennzeichnet, dass** das Edge-Gerät (14) ein Microcontroller umfasst.

4. Fertigungsprozess nach einem der vorhergehenden Ansprüche, **dadurch gekennzeichnet, dass** das Edge-Gerät (14) zur Übertragung von Daten mit der Steuerung (18) des Maschinennetzwerkes (12) in Verbindung steht.

5. Fertigungsprozess nach einem der vorhergehenden Ansprüche, **dadurch gekennzeichnet, dass** das Edge-Gerät (14) zur Übertragung von Daten mit mindesten einem Sensor (10) in Verbindung steht.

6. Fertigungsprozess nach einem der vorhergehenden Ansprüche, **dadurch gekennzeichnet, dass** mehr als zwei Edge-Geräte (14, 14', 14") zur Trennung des Sensornetzwerks (16) und des Maschinennetzwerks (12) vorgesehen sind.

7. Fertigungssystem nach einem der vorhergehenden Ansprüche, **dadurch gekennzeichnet, dass** als Sensoren Spektrometer, Pyrometer und/oder Kameras eingesetzt sind.

8. Fertigungssystem nach einem der vorhergehenden Ansprüche, **dadurch gekennzeichnet, dass** ein drittes Edge-Gerät (28) mit einem Visualisierungsgerät (30) zur Datenübertragung in Verbindung steht.

9. Verfahren zum Betreiben eines additiven Fertigungsverfahren, umfassend folgende Schritte:
- Steuern von Aktoren (10) mittels Prozessbefehlen die mittels einer echtzeitfähigen Steuerung (18) in einem Maschinennetzwerk (12) berechnet werden,
- Sammeln von Sensordaten (20) von Sensoren (8), durch die das Fertigungsverfahren überwacht wird,
- Übermittlung der Sensordaten (20) an einen Computer (22), der in einem vom Maschinennetzwerk (12) durch ein Edge-Gerät (14) getrennten Sensornetzwerk (16) angeordnet ist,
- Vorverarbeitung der Sensordaten (20) mittels des Computers (22) wobei
- die im Sensornetzwerk (16) vorverarbeiteten Sensordaten (20) dem Maschinennetzwerk (12) zur Fertigungssteuerung bereit gestellt werden.

10. Verfahren nach Anspruch 9, **dadurch gekennzeichnet, dass** die Vorverarbeitung der Sensordaten (20) mittels eines Anomaliedetektionsmodells (32) erfolgt.

11. Verfahren nach Anspruch 9 oder 10, **dadurch gekennzeichnet, dass** die Sensordaten (20) aus dem Sensornetzwerk (16) mittels eines zweiten Edge-Geräts (24) zur Vorbereitung an eine Berechnungscloud (26) geschickt werden.

12. Verfahren nach einem der Ansprüche 9 bis 11, **dadurch gekennzeichnet, dass** mittels eines dritten Edge-Geräts (28) Daten zur Prozessvisualisierung an ein Visualisierungsgerät (30) übermittelt werden

13. Verfahren nach einem der Ansprüche 9 bis 12, **dadurch gekennzeichnet, dass** ein Datenaustausch innerhalb des Netzwerkes mittels eines MQTT Protokolls erfolgt.

14. Verfahren nach Anspruch 13, **dadurch gekennzeichnet, dass** ein MQTT (34) Broker als Daten-BUS verwendet wird.
